# EUROPEAN PATENT SPECIFICATION

(11) **EP 2 517 575 B1**
(45) Date of publication and mention of the grant of the patent: **22.10.2014**
(21) Application number: 12161532.2
(22) Date of filing: 27.03.2012
(51) Int. Cl.: C12G 3/06, A23L 1/221

(54) **Alcoholic beverages having fresh and natural aroma of dill, and method of producing the same**
Alkoholische Getränke mit frischem und natürlichem Dillaroma und Herstellungsverfahren dafür
Boissons alcoolisées ayant un arôme frais et naturel de fenouil et leur procédé de production

(30) Priority: 28.04.2011 DK 201100328
(43) Date of publication of application: 31.10.2012
(73) Proprietor: Den Ny Spritfabrik A/S, 3480 Fredensborg (DK)
(72) Inventor: Elsner, Henrik Irgang, 2700 Brønshøj (DK)
(74) Representative: Johansen, Marianne

(56) References cited:
- SHYU YUNG-SHIN ET AL: "Evaluation of antioxidant ability of ethanolic extract from dill (Anethum graveolens L.) flower", FOOD CHEMISTRY, vol. 115, no. 2, July 2009 (2009-07), pages 515-521, XP002655635, ISSN: 0308-8146
- REFSGAARD H H F ET AL: "SENSORY IMPORTANCE AND MECHANISM OF PHOTOCHEMICAL CONVERSION OF CARVONE TO CARVONECAMPHOR IN ETHANOL-WATER MIXTURES", JOURNAL OF AGRICULTURAL AND FOOD CHEMISTRY, AMERICAN CHEMICAL SOCIETY, US, vol. 43, no. 5, 1 May 1995 (1995-05-01), pages 1177-1183, XP000501747, ISSN: 0021-8561, DOI: DOI:10.1021/JF00053A011
- FABER BIRGIT ET AL: "GC-IRMS and enantioselective analysis in biochemical studies in dill (Anethum graveolens L.)", FLAVOUR AND FRAGRANCE JOURNAL, vol. 12, no. 5, 1997, pages 305-314, XP002655636, ISSN: 0882-5734
- CALLAN ET AL: "Herb and oil composition of dill (Anethum graveolens L.): Effects of crop maturity and plant density", INDUSTRIAL CROPS AND PRODUCTS, ELSEVIER, NL, vol. 25, no. 3, 19 February 2007 (2007-02-19), pages 282-287, XP005894432, ISSN: 0926-6690, DOI: DOI:10.1016/J.INDCROP.2006.12.007
- CHUBEY B B ET AL: "CHANGES IN THE CHEMICAL COMPOSITION OF DILL OIL DURING HYDRO DISTILLATION", CANADIAN JOURNAL OF PLANT SCIENCE, vol. 56, no. 3, 1976, pages 619-622, XP002655637, ISSN: 0008-4220
- DATABASE EMBASE [Online] ELSEVIER SCIENCE PUBLISHERS, AMSTERDAM, NL; 2010, RADULESCU V ET AL: "Chemical composition of the volatile oil from different plant parts of Anethum graveolens L. (Umbelliferae) cultivated in Romania", XP002655638, Database accession no. EMB-2010589956 & FARMACIA 2010 ROMANIAN SOCIETY FOR PHARMACEUTICAL SCIENCES ROU, vol. 58, no. 5, 2010, pages 594-600, ISSN: 0014-8237

## Description

### Field of the invention

The present invention provides processes for producing ethanolic dill extract concentrate and dill aquavits, as well as the products obtainable by such processes.

### Background of the invention

Aquavit, like vodka, is typically distilled from either grain or potatoes. After distillation, it is flavoured with herbs, spices, or fruit oil. Commonly seen flavours are caraway, cardamom, cumin, anise, fennel, and lemon or orange peel. Dill has also been used as flavour.

From dill (*Anethum Graveolens)* it is possible to extract and isolate aroma compounds, and 35 compounds in dill oil have been identified from hydrodistillation of dill seeds [Singh et al. (2005) Chemical Constituents, Antimicrobial Investigations, and Antioxidative Potentials of Anethum graveolens L. Essential Oil and Acetone Extract: Part 52, J. Food Sci. 70, 208-215]. The major component was carvone (55.2%) followed by limonene (16.6%) and dill apiole. The dill oils had a characteristic odour and a sharp taste beside an antimicrobial effect.

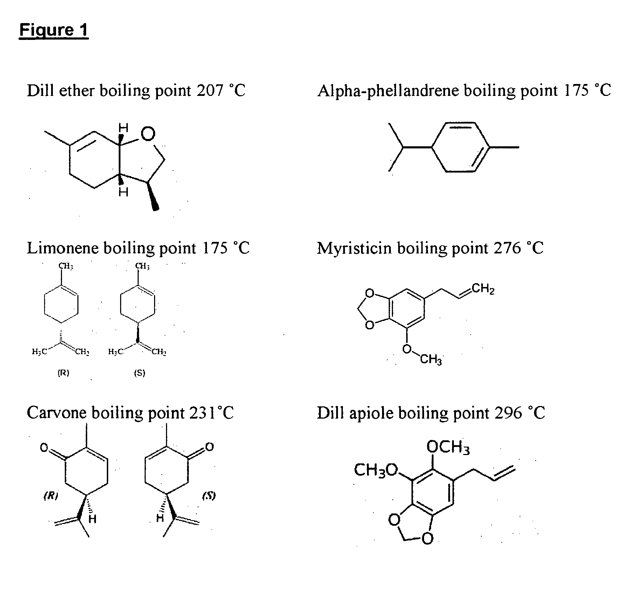

Carvone, limonene, dill ether, phellandrene and myristicin (see fig. 1) contribute to the organoleptic properties of dill. The odour of carvone is major odour in caraway, and dominates the other important odour notes of fresh dill herb, which is not preferable when desiring to provide an aquavit having a fresh and natural aroma of dill.

Traditionally aquavit is prepared by harvesting fragrant herbs and preparing one or more extracts by letting the individual herbs infuse in a mixture of water and ethanol. Once the extracts have finished infusing, it is filtered. One or more filtered extracts are then diluted with aqueous ethanol to obtain a spiced aquavit.

Mixing too many different extracts can spoil the flavours by making the aquavit taste of everything and nothing. Consequently, the preparation of a traditional extract of dill containing 35 compounds as described above is not practical, as it has the disadvantages of a dominant caraway odour and the fact that the dill extract contains 35 compounds, among which are sharp and bitter flavours, which spoil the dill taste.

Hence, there is a need for an alcoholic beverage, which provides a fresh and natural aroma of dill.

### Summary of the invention

The present invention was made in view of the prior art described above, and the object of the present invention is to provide an ethanolic dill extract concentrate, which can be used to prepare an alcoholic beverage, such as e.g. an aquavit, with a fresh and natural aroma of dill easily and reliably.

To solve the problem, the present invention provides a process for producing an ethanolic dill extract concentrate with fewer than six dominant peaks, as detected by gas chromatography comprising the following steps: a) harvesting crown dill from the period where only flower buds (4) are present and until when the flowers are about to bloom, which is when both flower buds (4) and blossomed flower buds (5) are present, and additionally no dill seeds (6) are present; b) infuse the harvested crown dill from step a) in aqueous ethanol; c) optionally filter the extract obtained in step b) and charge the extract into a distillation vessel with at least three theoretical plates; d) distilling the extract under such conditions that i) at least the first 5% is discarded as a pre-run; ii) at least the remaining last 5% of extract is discarded; thereby obtaining the ethanolic dill extract concentrate.

That is, the inventor has found that reducing the amount of dominating flavouring compounds present in traditional dill extracts to six or less flavouring compounds, by careful combination of dill harvesting time and extraction conditions an extract is provided, which has a fresh and natural aroma of dill, thereby completing this invention.

Shyu et al. (Food Chemistry, vol. 115, no. 2, 2009, pages 515-521) describes antioxidant ability of an ethanolic extract from dill flower. The ethanolic extract is obtained by collection samples of fresh dill flowers, leaves and seeds. The samples are lyophilised, and then extracted with ethanol. The extracts are filtered through a filter and combined followed by concentration using a rotary evaporator. Thus, the method described by Shyu et al. is essentially different from the present invention.

Further, the present inventor found that this extract can be diluted with an aqueous ethanol to directly obtain an alcoholic beverage with a fresh and natural aroma of dill, without the need for subsequent flavour adjustment, thus simplifying the manufacturing process of alcoholic beverages having fresh and natural aroma of dill, such as e.g. dill aquavit.

The present invention provides processes for producing ethanolic dill extract concentrate and alcoholic beverages, such as *e.g*. dill aquavits, as well as the products obtainable by such processes, as described below.
1. A process for producing an ethanolic dill extract concentrate with fewer than six dominant peaks, as detected by gas chromatography comprising the following steps:
   a) harvesting crown dill from the period where only flower buds (4) are present and until when the flowers are about to bloom, which is when both flower buds (4) and blossomed flower buds (5) are present, and additionally no dill seeds (6) are present;
   b) infuse the harvested crown dill from step a) in aqueous ethanol;
   c) optionally filter the extract obtained in step b) and charge the extract into a distillation vessel with at least three theoretical plates;
   d) distilling the extract under such conditions that:
      i) at least the first 5% is discarded as a pre-run;
      ii) at least the remaining last 5% of extract is discarded;
         thereby obtaining the ethanolic dill extract concentrate, , wherein the fewer than six dominant peaks account for more than 80% of a total peak integral from gas chromatography analysis, when ethanol itself is excluded from the total peak integral.
2. The process according to 1, where the crown dill is harvested when only flower buds (4) are present, and where no blossomed flower buds (5) and no dill seeds (6) are present.
3. The process according to any of 1 or 2, where the aqueous ethanol is between 45% and 85% v/v ethanol, preferably between 45% and 55% v/v ethanol.
4. The process according to any of 1-3, where the distillation vessel has at least 10 theoretical plates.
5. The process according to any of 1-4, where the distilling is carried out at temperature equivalent to a range of 70 °C to 90 °C at 1 atm pressure.
6. The process according to any of 1-5, where the fewer than six dominant peaks comprise phelandrene, limonene, dill ether, and carvone.
7. The process according to any of 1-6, where the time from harvesting the crown dill to infusing the harvested crown dill is 24 hours or less.
8. A process for producing an aquavit comprising the steps of any of 1-7, and additionally comprising step:
   e) mixing the ethanolic dill extract concentrate with aqueous ethanol to obtain an aquavit containing 37.5% to 55% v/v ethanol.
9. Ethanolic dill concentrate comprising non-ethanolic aroma components selected from:
   5-30% Phelandrene;
   10-30% Limonene;
   10-35% Dill ether;
   10-30% Carvone;
   0-10% other minor aroma components
      with the proviso that the sum of the non-ethanolic aroma components is 100%, and that each individual other minor aroma components is present in an amount of 2% or lower.
10. Aquavit consisting of a mixture of the concentrate of 9 and aqueous ethanol, where the Aquavit contains 37.5% to 55% v/v ethanol.

### Brief description of the drawings

*Figure 1*. Structure and boiling point of some aroma compounds, which can be extracted from dill.

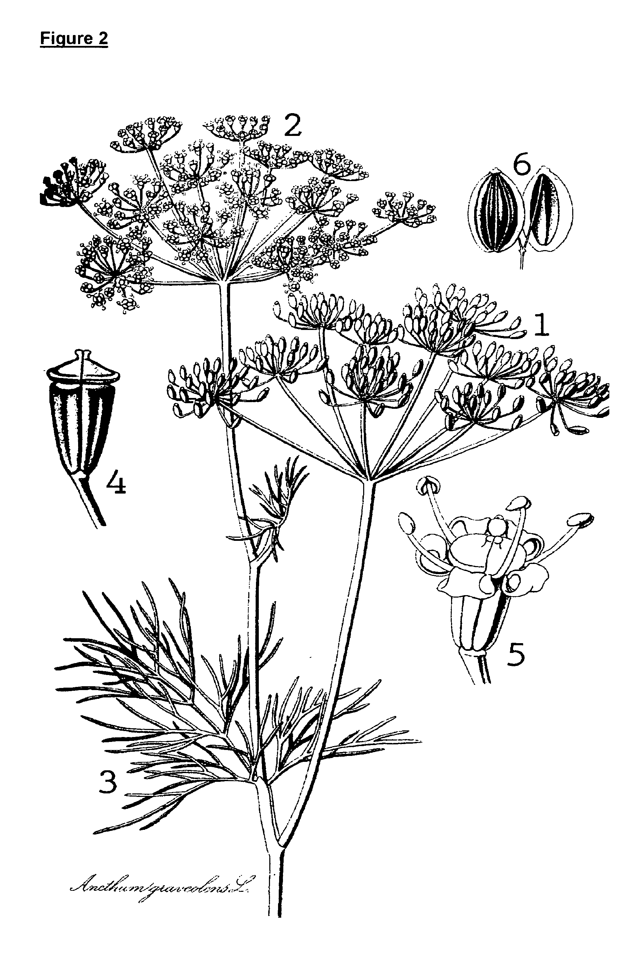

*Figure 2**.* The dill plant showing dill with crowns of flower buds (1), dill with crowns of blossomed flower buds (2), dill leaves (3), a flower bud (4) and a blossomed flower bud (5) and finally a dill seed (6).
*Figure 3**.* Gas chromatogram of ethanolic dill extract concentrate obtainable according to the present invention, which besides ethanol (Rₜ = 2.5 min) shows 4 dominant peaks attributable to phelandrene (Rₜ = 5.2), limonene (Rₜ = 4.7), dill ether (Rₜ = 8.7) and carvone (Rₜ = 10.8).
*Figure 4*. Gas chromatogram of dill aquavit made from the ethanolic dill extract concentrate, showing the same 4 dominant peaks as in figure 3, and additionally 2 peaks (Rₜ = 8.8 and 9.6 min).
*Figure 5**.* Comparative gas chromatogram of the commercially available dill aquavit called "Aalborg Dild Akvavit" (From Aalborg Akvavit, Denmark) showing more than 18 dominant peaks.

### Detailed description of the invention

In describing the embodiments of the invention specific terminology will be resorted to for the sake of clarity. However, the invention is not intended to be limited to the specific terms so selected, and it is understood that each specific term includes all technical equivalents which operate in a similar manner to accomplish a similar purpose.

When referring to ethanol content both alcohol content and ethanol content is used interchangeably, and the alcohol percentage is v/v unless otherwise stated.

Aqueous ethanol is used in the present invention as an infusion liquid, and also for diluting the ethanolic dill extract concentrate to adjust both the alcohol percentage, and the concentration of the ethanolic dill extract concentrate in the final alcoholic beverage. Aqueous ethanol as used in the context of the present invention is to be understood as having the constitutents water and ethanol. It may also contain other common impurities, such as the ones found in aqueous ethanol obtained from distilled from grain or potatoes. The aqueous ethanol used in the present invention is grain alchohol.

The preparation of an ethanolic dill extract concentrate involves the following general steps:
- Harvesting of crown dill,
- Infusing crown dill in aqueous ethanol,
- Optionally filtering the extract obtained from the infusion to remove solid material,
- Distilling the extract obtained from the infusion,
and thereby obtaining the ethanolic dill extract concentrate.

This ethanolic dill extract concentrate may subsequently be adjusted in both alcohol strength and concentration of the ethanolic dill extract concentrate in the final alcoholic beverage.

Thus, in one aspect of the invention a process is provided for producing an ethanolic dill extract concentrate with fewer than six dominant peaks, as detected by gas chromatography comprising the following steps: a) harvesting crown dill from the period where only flower buds (4) are present and until when the flowers are about to bloom, which is when both flower buds (4) and blossomed flower buds (5) are present, and additionally no dill seeds (6) are present; b) infuse the harvested crown dill from step a) in aqueous ethanol; c) optionally filter the extract obtained in step b) and charge the extract into a distillation vessel with at least three theoretical plates; d) distilling the extract under such conditions that i) at least the first 5% is discarded as a pre-run; ii) at least the remaining last 5% of extract is discarded; thereby obtaining the ethanolic dill extract concentrate.

An ethanolic dill extract concentrate is richer in content of the non-ethanolic aroma compounds which has been extracted from the crown dill. The ethanolic dill extract concentrate of the present invention has the advantage that it can be diluted with aqueous ethanol, such as e.g. aquavit to directly obtain an alcoholic beverage, such as e.g. a spiced aquavit with a fresh and natural aroma of dill, without the need for subsequent flavour adjustment, thus simplifying the manufacturing process of alcoholic beverages having fresh and natural aroma of dill, such as e.g. dill aquavit.

Presently, EU regulations define aquavit as having an ethanol content (alcohol percentage) of at least 37.5% v/v. However, the ethanolic dill extract concentrate may be diluted to many different alcohol percentages, such as for example ranges from 25-86%, 35-45%, 37½65%, or alcohol percentages such as 25, 35, 37½, 38, 40, 45, 50, 55, 60, 65, 70, 75, 80, 85, 86%. Preferably the alcohol percent is between 37½ and 50%, more preferably 37½ or 40%.

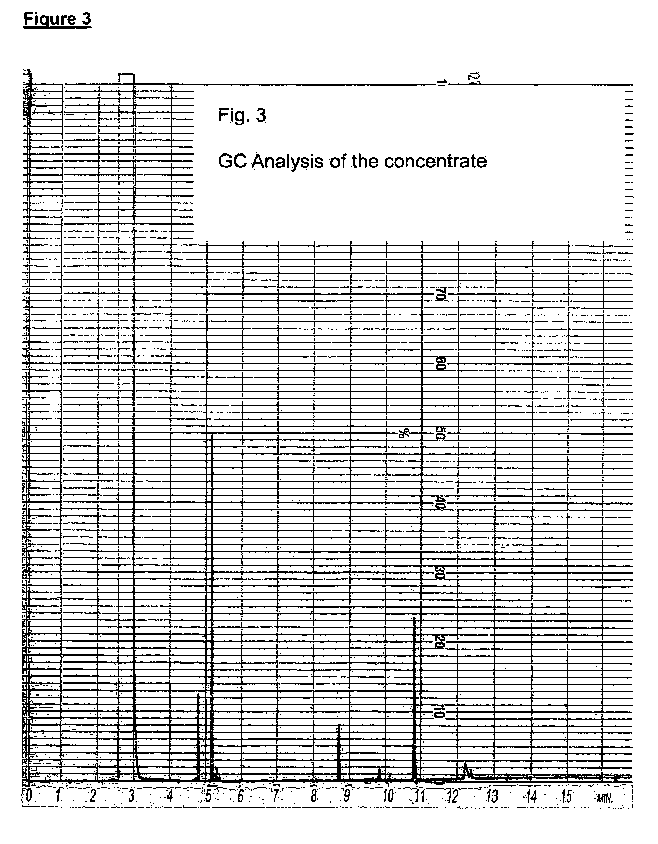

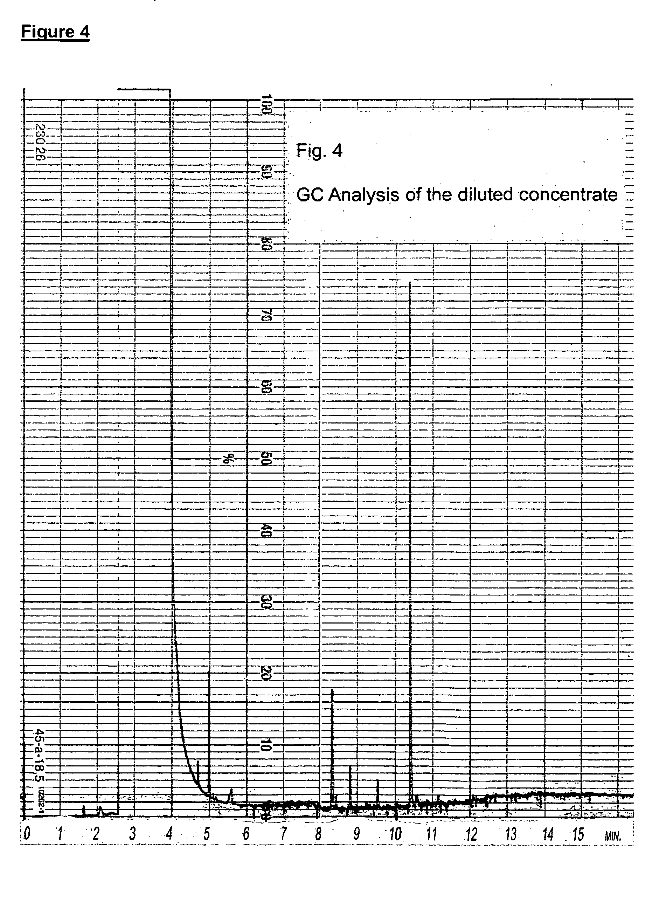

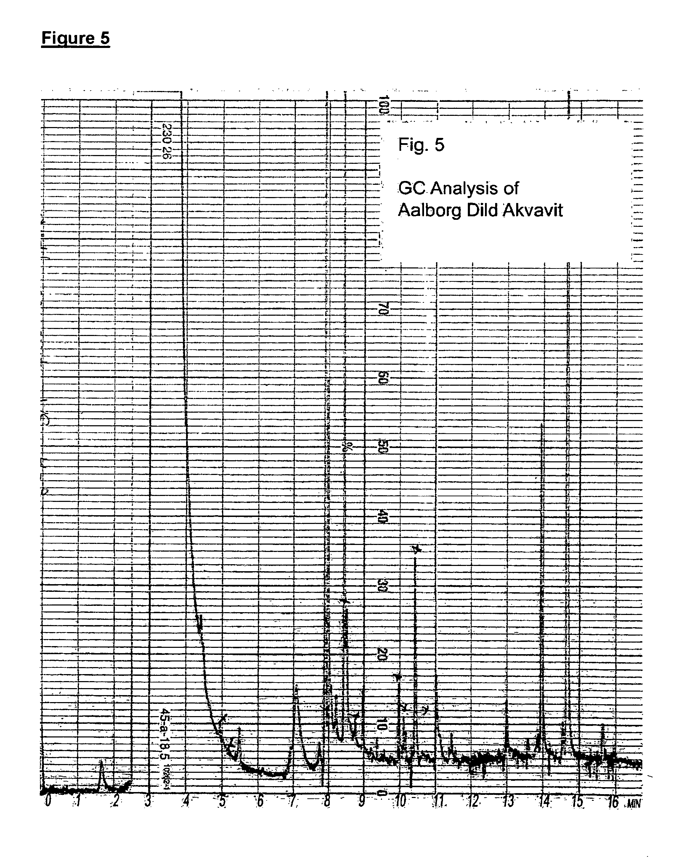

The ethanolic dill extract concentrate of the present invention contains fewer than six dominating aroma compounds as detected using the gas chromatography assay described in example 2, see also figure 3 (concentrate) and figure 4 (final product). Compared to a commercial aquavit with significantly more aroma compounds (see figure 5) these fewer than six dominating aroma compounds have the effect that the flavour of dill is experienced organoleptically, by test subjects sampling a dill aquavit according to the present invention, to be a very pure flavour of dill, which is not spoiled by sharp and bitter flavours.

The fewer than six dominant aroma compounds can preferably be the four compounds: phelandrene, limonene, dill ether and carvone, which the inventor has found to be the compounds responsible for the very pure flavour of dill.

By fewer than six dominant aroma compounds is meant that these fewer than six dominant peaks account for more than 80%, preferably more than 90%, more preferably more than 95% of a total peak integral from gas chromatography analysis, when ethanol itself is excluded from the total peak integral. In some embodiments these fewer than six dominant peaks account for more than 99% of a total peak integral from gas chromatography analysis, when ethanol itself is excluded from the total peak integral.

It was found that too much carvone makes the dill aquavit taste too much of caraway, and that a balance between carvone and the other three important aroma compounds phelandrene, limonene, and dill ether must be struck.

By careful selection of a combination of harvesting time for crown dill, infusion conditions and subsequent processing of the resulting extract, the inventor managed to obtain an ethanolic dill extract concentrate that has a balance between the four mentioned aroma compounds to convey a pure flavour of dill and, which further can be used directly for dilution to provide an alcoholic beverage, such as e.g. aquavit.

### Harvesting crown dill

Different commercial variants of dill exists, such as Mammut, Superdukat, and Sari, and other dill variants have been deposited in Nordic Gene Bank (NordGen, Sweden) such as e.g. Goda. In the present invention the Mammut dill variant has been used. It was grown in Denmark.

There is a tendency that the contents of phelandrene and limonene decreases the later the crown dill is harvested. Further the content of carvone increases the later the crown dill is harvested.

When harvesting dill for use in the present invention, it should preferably be harvested as early as possible after the green flower buds (4) have formed. Acceptable harvest times may be as late as when the flowers are about to bloom, which is when both flower buds (4) and blossomed flower buds (5) are present, and additionally no dill seeds (6) are present.

In some embodiments, the dill is harvested up an until blossomed flower buds (5) are present, but before any dill seeds (6) are present.

The effects of three different harvest times have been explored, and the resulting distribution of aroma components (as measured by the GC assay described in example 2) have been tabulated below.

**Table 1 - distribution of phelandrene, limonene, dill ether, carvone and other secondary aroma components based on harvest time.**

| Harvest time | Phelandrene | Limonene | Dill ether | Carvone | Other |
|---|---|---|---|---|---|
| Early | 28 % | 24 % | 32 % | 16 % | 0-1 % |
| Late | 4 % | 29 % | 13 % | 35 % | 19 % |
| Late | 0 % | 11 % | 10 % | 74 % | 5 % |

The above three samples were infused in 50% aqueous ethanol for 24 hours and distilled, discarding the first and last 5% of the distillate.

From the GC analysis in table 1 it can be seen that the important aroma compounds Phelandrene and Dill ether are increased the earlier the harvest is performed, and that carvone is increased the later the harvest is performed. Thus in one preferred embodiment, the crown dill is harvested when only flower buds (4) are present, and where no blossomed flower buds (5) and no dill seeds (6) are present.

### Infusing the harvested crown dill in aqueous ethanol

In order to balance the four dominating aroma compounds, and at the same time obtain secondary aroma compounds affecting the pure flavour of dill, the effect of the alcohol percentage in the infusion liquid was investigated. Crown dill harvested containing only flower buds (4) was infused in 96%, 80%, 60%, 50%, 40%, 20% aqueous ethanol.

It was found that primarily phelandrene was extracted at high ethanol content, whereas carvone was primarily extracted at low ethanol content. It was found that between 45% and 85% a good distribution of aroma compounds was obtained, and that 50% aqueous ethanol gave the best results with respect to balance the four dominating aroma compounds, and at the same time obtain secondary aroma compounds affecting the pure flavour of dill. In one preferred embodiment the infusion liquid is from 45% to 55% aqueous ethanol.

It was additionally found that the infusion should be done within 24 hours of the harvest in order to obtain the best results, as the quality of the infused product dropped significantly after 24 hours, due to i.a. oxidation of limonene to carvone, which is undesirable. If it is not possible to perform the infusion within 24 hours from harvest, the harvested dill can be frozen to e.g. -18 °C to increase the time from harvest to infusion to more than 24 hours without loss of quality in the end product.

### Distillation of the dill infused aqueous ethanol

In order to remove unwanted aroma compounds such as the sharp and bitter flavours, and other aroma compounds present in dill, which are unwanted, thereby refining the four dominating aroma compounds (phelandrene, limonene, dill ether and carvone), the infusion subjected to distillation, where the first and last fraction was discarded. If the distilled product was collected as 20 fractions, the first and last fraction would be discarded, thereby recovering 90% of the infusion. In some embodiments at least 5%, e.g. between 5% and 15% is discarded as a pre-run and at least the remaining last 5%, e.g. between 5% and 15% of the extract is discarded.

### Composition of ethanolic dill extract concentrate

While not wanting to be bound by any theory, the inventors believe that the process steps of early harvesting, infusion in 45-85%, preferably at 45-55% aqueous ethanol followed by filtration and distillation act in combination to yield a dill extract concentrate, which when diluted with aqueous ethanol to a final alcoholic beverage results in fresh and natural aroma of dill, and that this fresh and natural aroma of dill is due to the refinement of the four major aroma components phelandrene, limonene, dill ether and carvone in combination with other minor aroma components present in amounts of 2% or lower.

The inventor has observed that the concentrates which results in fresh and natural aroma of dill have the following characteristics:
5-30% Phelandrene;
10-30% Limonene;
10-35% Dill ether;
10-30% Carvone;
0-10% other minor aroma components

With the proviso that the sum of the non-ethanolic aroma components is 100%, and that each individual other minor aroma components is present in an amount of 2% or lower.

In one embodiment, an ethanolic dill concentrate comprises non-ethanolic aroma compounds selected from:
5-30% Phelandrene;
10-30% Limonene;
10-35% Dill ether;
10-30% Carvone;
0-10% other minor aroma components
with the proviso that the sum of the non-ethanolic aroma components is 100%, and that each individual other minor aroma components is present in an amount of 2% or lower, is provided.

### Examples

### Example 1 - Making an ethanolic dill extract concentrate (200 l)

Crown dill (20 kg) harvested within the last 24 hours is left to infuse in 50% v/v aqueous grain alcohol (200 I). After 24 hours infusion the extract is charged in a destillation vessel with copper dome (Müller Brennereianlagen GmbH, Germany) and a spiral reflux column (from AroMat, Germany).

The distillation vessel is heated, and the first and last fraction of distillate is discarded, whereby approximately 90% of the distillate is collected.

When diluting the above extract with aqueous ethanol, the final product will typically contains between 10% to 30% of the concentrate.

### Example 2 - Gas chromatography analysis of dill extract concentrate and final alcoholic beverages

A Perkin Elmer gas chromatograph with flow detection and nitrogen as carrier gas is used. The column is a HP crosslinked FFAP, width 0.33 µm, length 25 m, phase ratio 150. Sample size injected is 2 µl with a split of 1:3 for the diluted concentrate and 1:30 for the concentrate. The gas is detected using flame ionization detection (FID). The sensitivity of the Y-axis in for the diluted concentrates (figure 4 and 5) is 2 mV, and for the concentrate itself (figure 3) is 10 mV. The initial temperature of the column is 50 °C the first minute after injection followed by a gradient of 15 °C/min for the next 13 minutes ending at 245 °C, which temperature is maintained.

Peak heights are normalised based on piperonal as a reference compound to allow comparison of the content of the detected aroma compounds from sample to sample.

The identification of the peaks is done using a gas chromatograph coupled to a mass spectrometer (GC-MS).

## Claims

1. A process for producing an ethanolic dill extract concentrate with fewer than six dominant peaks, as detected by gas chromatography comprising the following steps:
a) harvesting crown dill from the period where only flower buds (4) are present and until when the flowers are about to bloom, which is when both flower buds (4) and blossomed flower buds (5) are present, and additionally no dill seeds (6) are present;
b) infuse the harvested crown dill from step a) in aqueous ethanol;
c) optionally filter the extract obtained in step b) and charge the extract into a distillation vessel with at least three theoretical plates;
d) distilling the extract under such conditions that:
i) at least the first 5% is discarded as a pre-run;
ii) at least the remaining last 5% of extract is discarded;
thereby obtaining the ethanolic dill extract concentrate, wherein the fewer than six dominant peaks account for more than 80% of a total peak integral from gas chromatography analysis, when ethanol itself is excluded from the total peak integral.

2. The process according to claim 1, where the crown dill is harvested when only flower buds (4) are present, and where no blossomed flower buds (5) and no dill seeds (6) are present.

3. The process according to any of claims 1 or 2, where the aqueous ethanol is between 45% and 85% v/v ethanol.

4. The process according to any of claims 1-3, where the distillation vessel has at least 10 theoretical plates.

5. The process according to any of claims 1-4, where the distilling is carried out at temperature equivalent to a range of 70 °C to 90 °C at 1 atm pressure.

6. The process according to any of claims 1-5, where the fewer than six dominant peaks comprise phelandrene, limonene, dill ether, and carvone.

7. The process according to any of claims 1-6, where the time from harvesting the crown dill to infusing the harvested crown dill is 24 hours or less.

8. A process for producing an aquavit comprising the steps of any of claims 1-7, and additionally comprising step:
e) mixing the ethanolic dill extract concentrate with aqueous ethanol to obtain an aquavit containing 37.5% to 55% v/v ethanol.

9. Ethanolic dill concentrate comprising non-ethanolic aroma components selected from:
5-30% Phelandrene;
10-30% Limonene;
10-35% Dill ether;
10-30% Carvone;
0-10% other minor aroma components
with the proviso that the sum of the non-ethanolic aroma components is 100%, and that each individual other minor aroma components is present in an amount of 2% or lower.

10. Aquavit consisting of a mixture of the dill aroma concentrate of claim 9 and aqueous ethanol, where the Aquavit contains 37.5% to 55% v/v ethanol.

## Patentansprüche

1. Verfahren zur Herstellung eines ethanolischen Dill-Extraktkonzentrats mit weniger als sechs dominanten Peaks, detektiert mittels Gaschromatographie, umfassend die folgenden Schritte:
a) Ernten von Dill mit Blütenständen (crown dill) von dem Zeitpunkt an, wenn nur Blütenknospen (4) vorhanden sind, und bis zu dem Zeitpunkt, wenn die Blüten kurz vor dem Blühen sind, nämlich wenn sowohl Blütenknospen (4) als auch blühende Blütenknospen (5) vorhanden sind, und außerdem keine Dillsamen (6) vorhanden sind;
b) Infundieren des geernteten Dills mit Blütenständen aus dem Schritt a) in wässrigem Ethanol;
c) optionales Filtrieren des in dem Schritt b) erhaltenen Extrakts und Füllen des Extrakts in ein Destillationsgefäß mit mindestens drei theoretischen Böden;
d) Destillieren des Extrakts unter solchen Bedingungen, dass:
i) zumindest die ersten 5% als Vorlauf verworfen werden;
ii) zumindest die verbleibenden letzten 5% des Extrakts verworfen werden;
wodurch das ethanolische Dill-Extraktkonzentrat erhalten wird, in dem weniger als sechs dominante Peaks mehr als 80% der gesamten Peakintegrale in der Gaschromatographie-Analyse ergeben, wobei bei der Bestimmung des gesamten Peakintegrals Ethanol selbst ausgeschlossen wird.

2. Verfahren nach Anspruch 1, bei dem der Dill mit Blütenständen geerntet wird, wenn nur Blütenknospen (4) vorhanden sind, und wenn keine blühenden Blütenknospen (5) und keine Dillsamen (6) vorhanden sind.

3. Verfahren nach einem der Ansprüche 1 oder 2, bei dem das wässrige Ethanol zwischen 45 Vol.-% und 85 Vol.-% Ethanol enthält.

4. Verfahren nach einem der Ansprüche 1 bis 3, bei dem der Destillationsbehälter mindestens 10 theoretische Böden aufweist.

5. Verfahren nach einem der Ansprüche 1 bis 4, bei dem die Destillation bei einer Temperatur durchgeführt wird, die einem Bereich von 70°C bis 90°C bei einem Druck von 1 atm entspricht.

6. Verfahren nach einem der Ansprüche 1 bis 5, bei dem die weniger als sechs dominanten Peaks solche umfassen, die Phelandren, Limonen, Dillether und Carvon entsprechen.

7. Verfahren nach einem der Ansprüche 1 bis 6, bei dem die Zeitspanne von der Ernte des Dills mit Blütenständen bis zum Infundieren des geernteten Dills mit Blütenständen 24 Stunden oder weniger beträgt.

8. Verfahren zur Herstellung eines Aquavits, das die Schritte nach einem der Ansprüche 1 bis 7 umfasst und außerdem den folgenden Schritt umfasst:
e) Vermischen des ethanolischen Dill-Extraktkonzentrats mit wässrigem Ethanol, um einen Aquavit zu erhalten, der 37,5 Vol.-% bis 55 Vol.-% Ethanol enthält.

9. Ethanolisches Dillkonzentrat, das nicht-ethanolische Aromakomponenten umfasst, die aus folgenden ausgewählt sind:
5-30% Phelandren;
10-30% Limonen;
10-35% Dillether;
10-30% Carvon;
0-10% sonstige geringfügige Aromakomponenten,
unter der Maßgabe, dass die Summe der nichtethanolischen Aromakomponenten 100% beträgt, und dass jede einzelne sonstige geringfügige Aromakomponente in einer Menge von 2% oder weniger vorliegt.

10. Aquavit, der aus einer Mischung des Dill-Aromakonzentrats nach Anspruch 9 und wässrigem Ethanol besteht, wobei der Aquavit 37,5 Vol.-% bis 55 Vol.-% Ethanol enthält.

## Revendications

1. Procédé de production d'un concentré d'extrait éthanolique d'aneth avec moins de six pics dominants, tels que détectés par chromatographie gazeuse comprenant les étapes suivantes :
a) la récolte d'aneth à ombelles à partir de la période durant laquelle seuls des boutons floraux (4) sont présents et jusqu'à ce que les fleurs soient sur le point de fleurir, ce qui correspond au moment auquel des boutons floraux (4) et des boutons floraux fleuris (5) sont présents, et en outre, aucune graine d'aneth (6) n'est présente ;
b) l'infusion de l'aneth à ombelles récolté de l'étape a) dans de l'éthanol aqueux ;
c) facultativement la filtration de l'extrait obtenu dans l'étape b) et le chargement de l'extrait dans une cuve de distillation avec au moins trois plaques théoriques ;
d) distillation de l'extrait dans des conditions telles que :
i) au moins les premiers 5 % sont rejetés en tant que prétraitement ;
ii) au moins les derniers 5 % de l'extrait sont rejetés ;
de manière à obtenir le concentré d'extrait éthanolique d'aneth, dans lequel les moins de six pics dominants représentent plus de 80 % d'une intégration totale des pics de l'analyse chromatographique, lorsque l'éthanol lui-même est exclu de l'intégration totale des pics.

2. Procédé selon la revendication 1, dans lequel l'aneth à ombelles est récolté lorsque seuls des boutons floraux (4) sont présents, et lorsque ni des boutons floraux fleuris (5), ni des graines d'aneth (6) ne sont présentes.

3. Procédé selon l'une quelconque des revendications 1 ou 2, dans lequel l'éthanol aqueux est compris entre 45 % et 85 % d'éthanol v/v.

4. Procédé selon l'une quelconque des revendications 1 à 3, dans lequel la cuve de distillation a au moins 10 plateaux théoriques.

5. Procédé selon l'une quelconque des revendications 1 à 4, dans lequel la distillation est conduite à une température équivalente à une plage de 70 °C à 90 °C à une pression de 1 atm.

6. Procédé selon l'une quelconque des revendications 1 à 5, dans lequel les moins de six pics dominants comprennent le phélandrène, le limonène, l'éther d'aneth et la carvone.

7. Procédé selon l'une quelconque des revendications 1 à 6, dans lequel le temps de la récolte d'aneth à ombelles à l'infusion de l'aneth à ombelles est de 24 heures ou moins.

8. Procédé pour produire un aquavit comprend les étapes de l'une quelconque des revendications 1 à 7, et comprenant en outre l'étape de :
e) mélange du concentré d'extrait éthanolique d'aneth avec de l'éthanol aqueux pour obtenir un aquavit contenant 37,5 % à 55 % v/v d'éthanol.

9. Concentré éthanolique d'aneth comprenant des composants aromatiques non éthanoliques choisis parmi :
5 à 30 % de phélandrène ;
10 à 30 % de limonène ;
10 à 35 % d'éther d'aneth ;
10 à 30 % de carvone ;
0 à 10 % d'autres composants aromatiques mineurs
à condition que la somme des composants aromatiques non éthanoliques soit de 100 %, et que chaque autre composant aromatique mineur individuel soit présent en une quantité de 2 % ou moins.

10. Composition d'aquavit d'un mélange du concentré d'arôme d'aneth de la revendication 9 et d'éthanol aqueux, l'aquavit contenant de 37,5 % à 55 % v/v d'éthanol.
